# DEMANDE DE BREVET EUROPEEN

(11) **EP 4 570 500 A1**
(43) Date de publication de la demande: **18.06.2025**
(21) Numéro de dépôt: 23217069.6
(22) Date de dépôt: 15.12.2023
(51) Int. Cl.: B33Y 80/00, F16J 15/10, F16J 15/14, G04B 37/10, G04B 37/11, G04B 39/02, G04D 3/00

(54) **RÉALISATION D'UN COMPOSANT D'HORLOGERIE COMPOSITE AVEC GARNITURE D'ÉTANCHÉITÉ**

(71) Demandeur: The Swatch Group Research and Development Ltd, 2074 Marin (CH)
(72) Inventeur: DOVCIK, Marek, 06250 Mougins (FR); FRANÇOIS, Nicolas, 2000 Neuchâtel (CH); NAPOLI, Sophie, 2000 Neuchâtel (CH)
(74) Mandataire: ICB SA

(57) **Abrégé**

Un aspect de l'invention concerne un procédé de réalisation d'un composant d'horlogerie (1000) composite, en première étape on se munit d'une embase (50) et d'un premier matériau (1), en deuxième étape on positionne ladite embase (50) sur un moyen de fabrication additive, en troisième étape on fait croître par fabrication additive un premier relief (10) du premier matériau (1) sur un côté de l'embase (50), en quatrième étape on contrôle le développement du premier relief (10), on reprend itérativement les troisième et quatrième étapes jusqu'à obtenir et vérifier un développement du premier relief (10) supérieur à une valeur de consigne, on stoppe la fabrication additive quand ce développement est supérieur à cette valeur de consigne, optionnellement on fait croître par fabrication additive un deuxième relief (20) d'un deuxième matériau (2) sur un côté de l'embase (50) ou/et sur le premier relief (10).

## Description

### Domaine technique de l'invention

L'invention concerne un procédé de réalisation d'un composant d'horlogerie composite, et plus particulièrement de réalisation d'un composant d'horlogerie composite avec garniture d'étanchéité.

L'invention concerne le domaine de l'étanchéité des composants et sous-ensembles d'horlogerie.

### Arrière-plan technologique

Les joints d'étanchéité sont généralement réalisés via moulage par injection ou extrusion, suivi d'usinage ou un autre procédé de fabrication nécessitant une étape d'usinage. Ces joints doivent remplir des critères très stricts en terme de tolérances.

En horlogerie les garnitures d'étanchéité sont présentes à tous les interfaces entre le milieu extérieur et l'intérieur de la pièce d'horlogerie, notamment d'une montre. En particulier et non limitativement on retrouve des joints d'étanchéité sur les surfaces d'appui des glaces, des fonds, des couronnes, des poussoirs, des targettes, ou d'autres composants statiques ou de manoeuvre, plus généralement de tous les éléments de pièce d'horlogerie ou de montre nécessitant une étanchéité performante.

Le composant horloger et la garniture d'étanchéité avec laquelle ce composant horloger doit être en contact de service sont fabriqués indépendamment.

L'assemblage des garnitures d'étanchéité, notamment des joints, est une opération délicate, confiée à du personnel qualifié, et nécessite la plupart du temps une opération de chassage afin d'assembler deux composants de montre rigides non étanches, avec le risque de blesser cette garniture d'étanchéité lors de cette opération de chassage. Il est aussi possible de solidariser un composant horloger avec une garniture d'étanchéité par collage ou similaire, mais la tenue dans le temps n'est pas bien assurée, en raison de la difficulté de mettre au point un adhésif convenant au couple de matériaux en présence et stable dans la plage de températures de service.

### Résumé de l'invention

Pour éviter de blesser les garnitures d'étanchéité, et aussi de devoir réaliser des usinages extrêmement précis en cotes et état de surface au niveau du composant horloger, l'invention se propose de réaliser les garnitures d'étanchéité, notamment des joints, sur mesure, directement sur des composants horlogers, et, en particulier, de réaliser un joint sur mesure, fabriqué, et notamment imprimé, sur un composant horloger.

L'invention doit permettre de s'affranchir de certaines étapes de chassage et/ou assemblage en réalisant une garniture, notamment un joint d'étanchéité directement sur le composant de pièce d'horlogerie, notamment de montre, de façon à améliorer la performance d'étanchéité, à la garantir, et aussi à garantir sa tenue dans le temps.

La réalisation classique de garnitures d'étanchéité par moulage et/ou tournage limite l'éventail des formes à obtenir, et implique en général la réalisation d'une garniture mono-matériau.

Aussi l'invention se propose encore d'ouvrir un spectre de formes de joints particuliers et non-conventionnels, par la réalisation de n'importe quelle forme de garniture ou de joint et cela directement sur le composant horloger.

L'invention met préférentiellement en oeuvre un procédé de fabrication additive, notamment et non limitativement d'impression 3D (c'est-à-dire tridimensionnelle).

A cet effet, l'invention concerne un procédé de réalisation d'un composant d'horlogerie composite.

Selon l'invention, dans une première étape on se munit d'une embase et d'au moins un premier matériau apte à la fabrication additive, dans une deuxième étape on prépare ladite embase et on la positionne sur un moyen de fabrication additive, dans une troisième étape on fait croître par fabrication additive un premier relief dudit au moins un premier matériau sur au moins un côté de ladite embase, dans une quatrième étape on contrôle le développement dudit premier relief en référence à une première valeur de consigne prédéterminée, et on reprend de façon itérative ladite troisième étape de fabrication additive avec apport dudit premier matériau et ladite quatrième étape jusqu'à l'obtention et la vérification d'un développement dudit premier relief supérieur ou égal à ladite première valeur de consigne prédéterminée, et on stoppe la fabrication additive avec apport dudit premier matériau quand ledit développement dudit premier relief est supérieur ou égal à ladite première valeur de consigne prédéterminée.

### Brève description des figures

Les buts, avantages et caractéristiques de l'invention apparaîtront mieux à la lecture de la description détaillée qui va suivre, en référence aux dessins annexés, où :

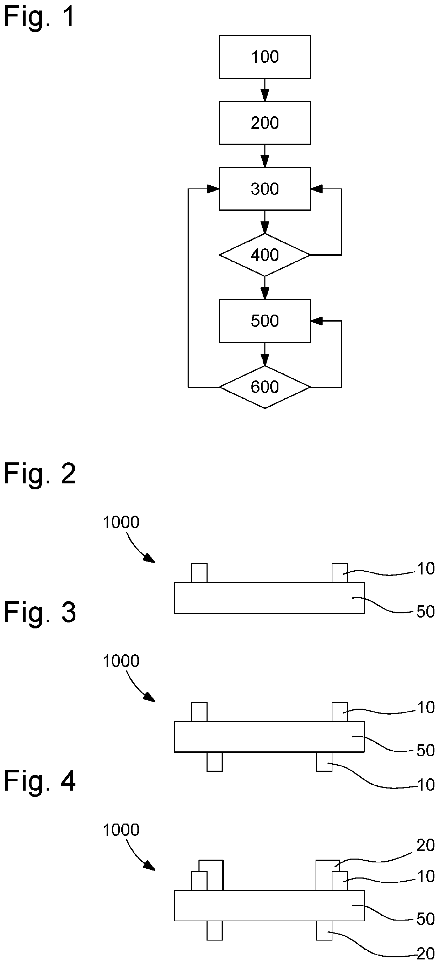

- la figure 1 est un logigramme illustrant les différentes étapes de réalisation d'un composant d'horlogerie composite selon l'invention, dans les différentes variantes de ce procédé ;
- la figure 2 illustre, de façon schématisée et en vue en coupe, un tel composant d'horlogerie composite réalisé selon ce procédé avec la croissance d'un premier relief dans un premier matériau sur un premier côté d'une embase;
- la figure 3 illustre, de façon schématisée similaire à la figure 2, un autre composant d'horlogerie composite réalisé selon ce procédé avec la croissance d'un premier relief dans un premier matériau sur un premier côté supérieur d'une embase, et dans une autre étape, la croissance d'un autre premier relief dans le même premier matériau sur un deuxième côté inférieur de la même embase;
- la figure 4 illustre, de façon schématisée similaire aux figures 2 et 3, un autre composant d'horlogerie composite réalisé selon ce procédé avec la croissance d'un premier relief dans un premier matériau sur un premier côté supérieur d'une embase, d'un deuxième relief dans un deuxième matériau en superposition partielle sur ce premier relief sur ce même premier côté supérieur, et d'un autre deuxième relief dans le même deuxième matériau sur un deuxième côté inférieur de la même embase.

### Description détaillée de l'invention

L'invention concerne un procédé de réalisation d'un composant d'horlogerie 1000 composite.

Dans une première étape 100 on se munit d'une embase 50 et d'au moins un premier matériau 1 apte à la fabrication additive.

Dans une deuxième étape 200 on prépare l'embase 50 et on la positionne sur un moyen de fabrication additive.

Dans une troisième étape 300 on fait croître par fabrication additive un premier relief 10 du au moins un premier matériau 1 sur au moins un côté de l'embase 50.

Dans une quatrième étape 400 on contrôle le développement du premier relief 10 en référence à une première valeur de consigne prédéterminée.

Et on reprend de façon itérative la troisième étape 300 de fabrication additive avec apport du premier matériau 1 et la quatrième étape 400 jusqu'à l'obtention et la vérification d'un développement du premier relief 10 supérieur ou égal à la première valeur de consigne prédéterminée, et on stoppe la fabrication additive avec apport du premier matériau 1 quand le développement du premier relief 10 est supérieur ou égal à la première valeur de consigne prédéterminée.

Plus particulièrement, dans la première étape 100 ou dans l'une des étapes ultérieures, on se munit d'au moins un deuxième matériau 2 différent du premier matériau 1, et, pendant la troisième étape 300 ou pendant une cinquième étape 500 consécutive à l'obtention d'un développement du premier relief 10 supérieur ou égal à la première valeur de consigne prédéterminée, on fait croître par fabrication additive un deuxième relief 20 du au moins un deuxième matériau 2 sur au moins un côté de l'embase 50 ou/et sur le premier relief 10.

Plus particulièrement, dans une première variante, on fait croître par fabrication additive le deuxième relief 20 dès la troisième étape 300, et, dans la quatrième étape 400 ou dans une sixième étape 600, on contrôle le développement du deuxième relief 20 en référence à une deuxième valeur de consigne prédéterminée, et on reprend de façon itérative, d'une part une étape de fabrication qui est la troisième étape 300 de fabrication additive avec apport du deuxième matériau 2 ou une dite cinquième étape 500 de fabrication additive avec apport du deuxième matériau 2, et d'autre part une étape de vérification qui est la sixième étape 600, jusqu'à l'obtention et la vérification d'un développement du deuxième relief 20 supérieur ou égal à la deuxième valeur de consigne prédéterminée, et on stoppe la fabrication additive avec apport du deuxième matériau 2 quand le développement du deuxième relief 20 est supérieur ou égal à la deuxième valeur de consigne prédéterminée.

Plus particulièrement, dans une deuxième variante, on fait croître par fabrication additive le deuxième relief 20 pendant une telle cinquième étape 500 consécutive à l'obtention d'un développement du premier relief 10 supérieur ou égal à la première valeur de consigne prédéterminée. Et, dans une sixième étape 600, consécutive à la cinquième étape 500 on contrôle le développement du deuxième relief 20 en référence à une deuxième valeur de consigne prédéterminée, et on reprend de façon itérative la cinquième étape 500 de fabrication additive avec apport du deuxième matériau 2, et la sixième étape 600, jusqu'à l'obtention et la vérification d'un développement du deuxième relief 20 supérieur ou égal à la deuxième valeur de consigne prédéterminée, et on stoppe la fabrication additive avec apport du deuxième matériau 2 quand le développement du deuxième relief 20 est supérieur ou égal à la deuxième valeur de consigne prédéterminée.

Plus particulièrement encore, la sixième étape 600 est distincte de la quatrième étape 400.

Plus particulièrement, dans une autre variante, dans la troisième étape 300 de fabrication additive avec apport du premier matériau 1, on fait croître par fabrication additive le premier relief 10 du au moins un premier matériau 1 sur au moins deux côtés distincts de l'embase 50, en deux étapes séparées, une de chaque côté de l'embase 50.

Plus particulièrement, dans une autre variante, pendant la troisième étape 300 ou pendant une cinquième étape 500, on fait croître par fabrication additive un deuxième relief 20 du au moins un deuxième matériau 2 sur au moins deux côtés distincts de l'embase 50, en deux étapes séparées, une de chaque côté de l'embase 50.

Plus particulièrement, dans une autre variante pendant la troisième étape 300 ou pendant une telle cinquième étape 500, on fait croître par fabrication additive un deuxième relief 20 du au moins un deuxième matériau 2 sur au moins une partie du premier relief 10.

Plus particulièrement, on choisit le premier matériau 1 apte à constituer un premier relief 10 constituant une première garniture d'étanchéité.

Plus particulièrement, on choisit le deuxième matériau 2 apte à constituer un deuxième relief 20 constituant une deuxième garniture d'étanchéité.

Plus particulièrement, on choisit le deuxième matériau 2 apte à constituer un deuxième relief 20 constituant une deuxième garniture d'étanchéité avec des propriétés d'arrêt complémentaires à celles de la première garniture d'étanchéité.

Plus particulièrement, on choisit pour le premier matériau 1 et le deuxième matériau 2 des matériaux élastomères de dureté Shore différente à l'état final respectif du premier relief 10 et du deuxième relief 20 après les fabrications additives par apport respectivement du premier matériau 1 et du deuxième matériau 2.

Plus particulièrement, on choisit pour le premier matériau 1 et chaque au moins un deuxième matériau 2 un matériau apte à former une couche étanche après les fabrications additives par apport respectivement du premier matériau 1 et du au moins un deuxième matériau 2.

Plus particulièrement, on réalise le premier relief 10 et le deuxième relief 20 avec des développements géométriquement différents par rapport à l'embase 50.

Plus particulièrement, on choisit pour au moins le premier matériau 1 un matériau apte à former un dit premier relief 10 présentant un contraste optique avec l'embase 50, pour une fonction d'affichage du composant d'horlogerie 1000.

Plus particulièrement, on choisit pour au moins le premier matériau 1 un matériau apte à former un dit premier relief 10 fluorescent ou phosphorescent.

Plus particulièrement, on choisit pour au moins le premier matériau 1 un matériau apte à former un dit premier relief 10 transparent et/ou coloré.

Plus particulièrement, on choisit une embase 50 transparente ou translucide.

Plus particulièrement, on choisit une glace ou un fond ou une carrure ou une lunette ou une couronne comme embase 50.

Plus particulièrement, on effectue ladite fabrication additive par impression tridimensionnelle.

L'invention repose ainsi sur la réalisation d'une garniture d'étanchéité, notamment d'un joint, sur mesure réalisée en fabrication additive, notamment imprimée en 3D directement sur un composant horloger, ce qui garantit une répétabilité de fabrication et la maîtrise des coûts de production.

L'homme de métier pourra également appliquer ce système de joint sur-imprimé sur différents types de composants horlogers comme les couronnes, les fonds chassés, les carrures, les containers pour les montres « capsule », et similaires.

L'impression 3D peut être réalisée avec une imprimante appropriée, ayant une option de nivellement personnalisé. Selon la complexité du composant, la buse de l'imprimante peut être modifiée et adaptée pour une impression optimale.

Ce procédé présente l'avantage de ne pas générer de rebuts, ni en ce qui concerne la fabrication de la garniture d'étanchéité, ni en ce qui concerne le sous-ensemble fonctionnel qu'est le composant d'horlogerie composite réalisé par le procédé selon l'invention en comportant un composant horloger de base et au moins une garniture appliquée de façon permanente sur ce composant de base. Il n'y a donc pas de perte de matière, ni de perte de temps opératoire.

L'invention rend possible la réalisation de formes de joints difficiles, complexes et irréalisables avec une autre technologie.

Les matières à utiliser en accord avec cette technologie sont toutes les matières thermoplastiques, ce qui permet de couvrir une grande variété de propriétés recherchées dans une garniture d'étanchéité.

Une garniture d'étanchéité ainsi réalisée de façon additive, et notamment imprimée, peut remplir plusieurs fonctions: fonction d'étanchéité, fonction d'affichage ou/et esthétique ou/et et décorative, grâce aux larges possibilités de coloration, transparence, forme, phosphorescence, fluorescence, et aussi de réalisation de garnitures multi-matériaux, ou multi-coloris, ou autre.

## Revendications

1. Procédé de réalisation d'un composant d'horlogerie (1000) composite, selon lequel dans une première étape (100) on se munit d'une embase (50) et d'au moins un premier matériau (1) apte à la fabrication additive, dans une deuxième étape (200) on prépare ladite embase (50) et on la positionne sur un moyen de fabrication additive, dans une troisième étape (300) on fait croître par fabrication additive un premier relief (10) dudit au moins un premier matériau (1) sur au moins un côté de ladite embase (50), dans une quatrième étape (400) on contrôle le développement dudit premier relief (10) en référence à une première valeur de consigne prédéterminée, et on reprend de façon itérative ladite troisième étape (300) de fabrication additive avec apport dudit premier matériau (1) et ladite quatrième étape (400) jusqu'à l'obtention et la vérification d'un développement dudit premier relief (10) supérieur ou égal à ladite première valeur de consigne prédéterminée, et on stoppe la fabrication additive avec apport dudit premier matériau (1) quand ledit développement dudit premier relief (10) est supérieur ou égal à ladite première valeur de consigne prédéterminée.

2. Procédé de réalisation selon la revendication 1, **caractérisé en ce que**, dans ladite première étape (100) ou dans l'une des étapes ultérieures, on se munit d'au moins un deuxième matériau (2) différent dudit premier matériau (1), et **en ce que**, pendant ladite troisième étape (300) ou pendant une cinquième étape (500) consécutive à l'obtention d'un développement dudit premier relief (10) supérieur ou égal à ladite première valeur de consigne prédéterminée, on fait croître par fabrication additive un deuxième relief (20) dudit au moins un deuxième matériau (2) sur au moins un côté de ladite embase (50) ou/et sur ledit premier relief (10).

3. Procédé de réalisation selon la revendication 2, **caractérisé en ce qu'**on fait croître par fabrication additive ledit deuxième relief (20) dès ladite troisième étape (300), et **en ce que**, dans ladite quatrième étape (400) ou dans une sixième étape (600), on contrôle le développement dudit deuxième relief (20) en référence à une deuxième valeur de consigne prédéterminée, et on reprend de façon itérative, d'une part une étape de fabrication qui est ladite troisième étape (300) de fabrication additive avec apport dudit deuxième matériau (2) ou une dite cinquième étape (500) de fabrication additive avec apport dudit deuxième matériau (2), et d'autre part une étape de vérification qui est ladite sixième étape (600), jusqu'à l'obtention et la vérification d'un développement dudit deuxième relief (20) supérieur ou égal à ladite deuxième valeur de consigne prédéterminée, et on stoppe la fabrication additive avec apport dudit deuxième matériau (2) quand ledit développement dudit deuxième relief (20) est supérieur ou égal à ladite deuxième valeur de consigne prédéterminée.

4. Procédé de réalisation selon la revendication 2, **caractérisé en ce qu'**on fait croître par fabrication additive ledit deuxième relief (20) pendant une dite cinquième étape (500) consécutive à l'obtention d'un développement dudit premier relief (10) supérieur ou égal à ladite première valeur de consigne prédéterminée, **caractérisé en ce que**, dans une sixième étape (600) consécutive à ladite cinquième étape (500) on contrôle le développement dudit deuxième relief (20) en référence à une deuxième valeur de consigne prédéterminée, et on reprend de façon itérative ladite cinquième étape (500) de fabrication additive avec apport dudit deuxième matériau (2), et ladite sixième étape (600), jusqu'à l'obtention et la vérification d'un développement dudit deuxième relief (20) supérieur ou égal à ladite deuxième valeur de consigne prédéterminée, et on stoppe la fabrication additive avec apport dudit deuxième matériau (2) quand ledit développement dudit deuxième relief (20) est supérieur ou égal à ladite deuxième valeur de consigne prédéterminée.

5. Procédé de réalisation selon la revendication 3 ou 4, **caractérisé en ce que** ladite sixième étape (600) est distincte de ladite quatrième étape (400).

6. Procédé de réalisation selon l'une des revendications 1 à 5, **caractérisé en ce que**, dans ladite troisième étape (300) de fabrication additive avec apport dudit premier matériau (1), on fait croître par fabrication additive ledit premier relief (10) dudit au moins un premier matériau (1) sur au moins deux côtés distincts de ladite embase (50), dans deux étapes séparées, une de chaque côté de ladite embase (50).

7. Procédé de réalisation selon l'une des revendications 2 à 6, **caractérisé en ce que**, pendant ladite troisième étape (300) ou pendant une dite cinquième étape (500), on fait croître par fabrication additive un deuxième relief (20) dudit au moins un deuxième matériau (2) sur au moins deux côtés distincts de ladite embase (50), dans deux étapes séparées, une de chaque côté de ladite embase (50).

8. Procédé de réalisation selon l'une des revendications 2 à 7, **caractérisé en ce que**, pendant ladite troisième étape (300) ou pendant une dite cinquième étape (500), on fait croître par fabrication additive un deuxième relief (20) dudit au moins un deuxième matériau (2) sur au moins une partie dudit premier relief (10).

9. Procédé de réalisation selon l'une des revendications 1 à 8, **caractérisé en ce qu'**on choisit ledit premier matériau (1) apte à constituer un dit premier relief (10) constituant une première garniture d'étanchéité.

10. Procédé de réalisation selon l'une des revendications 2 à 8, **caractérisé en ce qu'**on choisit ledit deuxième matériau (2) apte à constituer un dit deuxième relief (20) constituant une deuxième garniture d'étanchéité.

11. Procédé de réalisation selon les revendications 9 et 10, **caractérisé en ce qu'**on choisit ledit deuxième matériau (2) apte à constituer un dit deuxième relief (20) constituant ladite deuxième garniture d'étanchéité avec des propriétés d'arrêt complémentaires à celles de ladite première garniture d'étanchéité.

12. Procédé de réalisation selon l'une des revendications 2 à 11, **caractérisé en ce qu'**on choisit pour ledit premier matériau (1) et ledit deuxième matériau (2) des matériaux élastomères de dureté Shore différente à l'état final respectif dudit premier relief (10) et dudit deuxième relief (20) après les fabrications additives par apport respectivement dudit premier matériau (1) et dudit deuxième matériau (2).

13. Procédé de réalisation selon l'une des revendications 2 à 12, **caractérisé en ce qu'**on choisit pour ledit premier matériau (1) et chaque dit au moins un deuxième matériau (2) un matériau apte à former une couche étanche après les fabrications additives par apport respectivement dudit premier matériau (1) et dudit au moins un deuxième matériau (2).

14. Procédé de réalisation selon l'une des revendications 2 à 13, **caractérisé en ce qu'**on réalise ledit premier relief (10) et ledit deuxième relief (20) avec des développements différents par rapport à ladite embase (50).

15. Procédé de réalisation selon l'une des revendications 1 à 14, **caractérisé en ce qu'**on choisit pour au moins ledit premier matériau (1) un matériau apte à former un dit premier relief (10) présentant un contraste optique avec ladite embase (50), pour une fonction d'affichage dudit composant d'horlogerie (1000).

16. Procédé de réalisation selon l'une des revendications 1 à 15, **caractérisé en ce qu'**on choisit pour au moins ledit premier matériau (1) un matériau apte à former un dit premier relief (10) fluorescent ou phosphorescent.

17. Procédé de réalisation selon l'une des revendications 1 à 16, **caractérisé en ce qu'**on choisit pour au moins ledit premier matériau (1) un matériau apte à former un dit premier relief (10) transparent et/ou coloré.

18. Procédé de réalisation selon l'une des revendications 1 à 17, **caractérisé en ce qu'**on choisit une dite embase (50) transparente ou translucide.

19. Procédé de réalisation selon l'une des revendications 1 à 18, **caractérisé en ce qu'**on choisit une glace ou un fond ou une carrure ou une lunette ou une couronne comme dite embase (50).

20. Procédé de réalisation selon l'une des revendications 1 à 19, **caractérisé en ce qu'**on effectue ladite fabrication additive par impression tridimensionnelle.

21. Pièce d'horlogerie comprenant un composant d'horlogerie selon le procédé défini par l'unes des revendications 1 à 20.
